# EUROPÄISCHE PATENTSCHRIFT

(11) **EP 1 344 629 B1**
(45) Veröffentlichungstag und Bekanntmachung des Hinweises auf die Patenterteilung: **14.07.2004**
(21) Anmeldenummer: 03003001.9
(22) Anmeldetag: 12.02.2003
(51) Int. Cl.: B29C 63/04, B27G 11/00, B27D 5/00, B27N 7/00

(54) **Postformingverfahren zum Beschichten der Schmalseiten plattenförmiger Werkstücke**
Postforming method for covering the narrow sides of flat workpieces
Procédé de postformage pour revêtir les côtés minces d'une plaque

(30) Priorität: 11.03.2002 DE 10210605
(43) Veröffentlichungstag der Anmeldung: 17.09.2003
(73) Patentinhaber: Westag & Getalit AG, 33378 Rheda-Wiedenbrück (DE)
(72) Erfinder: Kalinowski, Gerhard, 33378 Rheda-Wiedenbrück (DE)
(74) Vertreter: Elbertzhagen, Otto, Dipl.-Ing., Patentanwalt

(56) Entgegenhaltungen:
- EP-A- 0 389 400
- EP-A- 0 545 390
- EP-A- 0 552 589
- DE-A- 2 357 051

## Beschreibung

Die Erfindung bezieht sich auf ein Postformingverfahren zum Beschichten von profilierten Schmalseiten plattenförmigen Werkstücke aus Holzensatz materialien.

Mit einem solchen Postformingverfahren ist es bislang lediglich möglich gewesen, zwei einander gegenüberliegende Schmalseiten der in der Regel rechteckigen oder quadratischen Werkstücke mit dem nachverformbaren Beschichtungsmaterial zu beschichten. Eine auf diese Weise vorzunehmende Beschichtung von über Eck aneinander anschließenden Werkstückschmalseiten scheiterte bislang daran, das freigeschnittene, flächige Beschichtungsmaterial an der Werkstückecke im Bereich der Eckkante, an der die aneinander grenzenden Werkstück-Schmalseiten zusammenlaufen, sauber zusammenfügen zu können. Dieses Problem stellt sich bei der Beschichtung einander parallel gegenüberliegender Werkstückseiten im Postformingverfahren nicht, weil man hierbei die zu den im Postformingverfahren beschichteten Schmalseiten quer verlaufenden Schmalseiten senkrecht zur Werkstückoberseite stehend ausführen kann, wodurch die Abwicklung der jeweiligen Eckkante in der Ebene des flächigen Beschichtungsmaterials eine Gerade ergibt, die man an den freistehenden Beschichtungsstreifen leicht ausbilden und paßgenau auf die Werkstückeckkante auflegen kann.

Dokument DE 2 357 051 offenbart ein Verfahren zum Beschichten von Holzwerkstoffplatten bei dem die Beschichtungen um auf einen Seite der Holzwerkstoffplatten abegerundete Kanten herungezogen werden.

Der Erfindung liegt nun die Aufgabe zugrunde, ein Postformingverfahren der gattungsgemäßen Art zu schaffen, mit dem eckige, plattenförmige Werkstücke, die zumindest an zwei über Eck aneinander anschließenden Schmalseiten profiliert sind, an diesen Schmalseiten beschichtet werden können, wobei sich die freigeschnittenen, flächigen Beschichtungsstreifen an der Werkstückeckkante spaltfrei zusammenfügen lassen.

Diese Aufgabe wird bei einem Postformingverfahren der gattungsbildenden Art durch die kennzeichnenden Merkmale des Patentanspruchs 1 gelöst.

Für die Erfindung ist von Bedeutung, daß das Freischneiden der Streifen des flächigen Beschichtungsmaterials und deren Anformen an die profilierten, über Eck aneinander angrenzenden Werkstückschmalseiten bei Werkstücken von vor allem rechteckigen oder quadratischen sowie insbesondere größeren Formaten, wie Türblätter, in im Werkstückdurchlauf aufeinanderfolgenden, maschinellen Arbeitsgängen vorgenommen werden kann. Wichtig ist die vorherige Profilierung des zunächst quer zur Vorschubrichtung an die betreffende Werkstückecke angrenzenden Bereichs der jeweiligen Werkstückschmalseite, bevor auf die über Eck daran anschließende, in der Vorschubrichtung liegende Werkstückschmalseite das Anformen und Ankleben des Beschichtungsstreifens vorgenommen wird. Andernfalls nämlich, also beim nachträglichen Profilieren der zunächst quer zur Vorschubrichtung liegenden und nach dem Wenden des Werkstücks in der Vorschubrichtung verlaufenden Schmalseite, würde die Eckkante oder der Eckgrat relativ zu der bereits beschichteten Werkstückschmalseite sich verlagern, wodurch ein Abtrag auch an dem Beschichtungsmaterial erfolgte, aufgrund dessen eine lückenlose Beschichtung an der betreffenden Werkstückecke nicht mehr möglich wäre.

Grundsätzlich kann das neue Postformingverfahren bereits dann angewendet werden, wenn lediglich zwei über Eck zusammenlaufende Schmalseiten eines plattenförmigen Werkstücks beschichtet werden sollen. Bei quadratischen oder rechteckigen Werkstücken, die in Umfangsrichtung an drei aufeinanderfolgenden Schmalseiten nach dem neuen Postformingverfahren beschichtet werden, wiederholt sich an der zweiten Ecke der Bearbeitungsvorgang insoweit, als zunächst an der dritten Werkstückschmalseite, welche an die zweite Werkstückecke anschließt, zumindest von dieser Ecke aus eine Teilprofilierung vorgenommen wird. Danach erst wird an der ersten Werkstückschmalseite das Anformen des Beschichtungsstreifens vorgenommen. Diese Bearbeitungsfolge setzt sich rund um ein Werkstück in gleichem Sinne fort, wenn es darum geht, an allen Schmalseiten nach dem neuen Postformingverfahren eine Beschichtung vorzunehmen. Die entsprechenden Merkmale hierzu ergeben sich aus den Unteransprüchen.

Die Erfindung wird nachfolgend anhand der Zeichnung noch näher erläutert. Dabei zeigen:

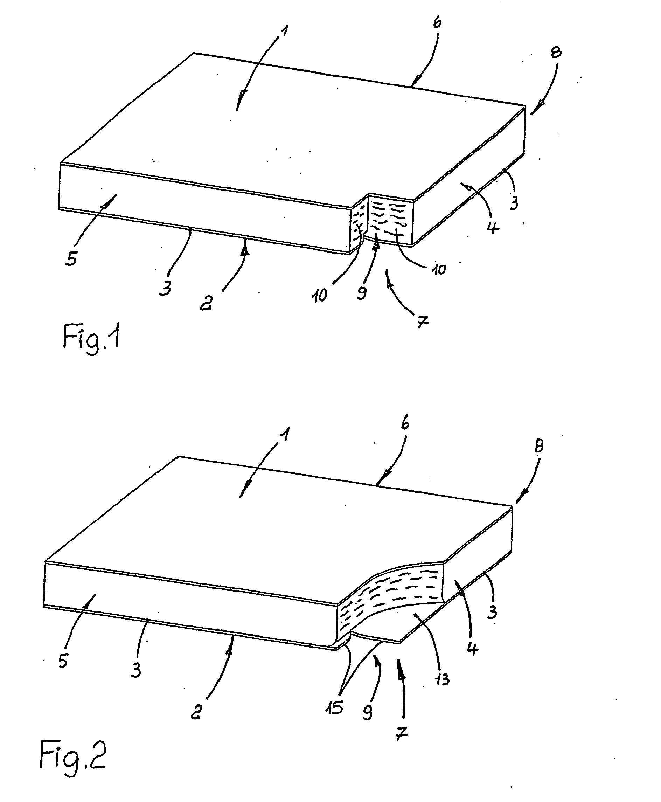

- Fig. 1 - 8: jeweils die Unteransicht eines plattenfbrmigen Werkstücks nach den einzelnen Schritten zum Beschichten dreier Schmalseiten im Postformingverfahren.

Im einzelnen zeigen die Fig. 1 - 8 ein plattenförmiges Werkstück, aus dem beispielsweise eine Zimmertür hergestellt wird. Das Werkstück ist mit seiner Unterseite 1 nach oben hin liegend angeordnet, entsprechend liegt die Oberseite 2 des Werkstücks nach unten hin, was nicht nur für die Darstellung der einzelnen Verfahrensschritte vorteilhaft ist, sondern auch der Anordnung des Werkstücks im Maschinendurchlauf entspricht. Denn bei den spangebenden und sonstigen Bearbeitungen liegt das Werkstück mit seiner Oberseite 2 auf einer Transportvorrichtung auf, die das Werkstück an den erforderlichen Bearbeitungsstationen vorbeibefördert.

Die hier in Betracht kommende Bearbeitung wird an einer ersten Schmalseite 4, an einer zweiten Schmalseite 5 und an einer dritten Schmalseite 6 des Werkstücks vorgenommen, bei diesen Schmalseiten handelt es sich in der Ausgangslage um senkrecht zur Werkstückoberseite 2 stehende Schmalflächenseiten, die entsprechend der quadratischen oder rechteckigen Grundform des Werkstücks über eine 90-Grad-Außenecke aneinander anschließen.

Nach der jeweiligen spangebenden Bearbeitung sind die Schmalseiten 4 - 6 des Werkstücks profiliert, insbesondere entlang ihrer Kanten, die zur Werkstückoberseite 2 hin liegen, gerundet bzw. gesoftet, wie es in den betreffenden Figuren angedeutet ist.

An seiner Oberseite 2 ist das Werkstück mittels einer Beschichtung 3 kaschiert, bei der es sich vornehmlich um eine Kunststoffolie handelt. Das Trägermaterial des Werkstücks besteht entweder aus MDF- oder aus Spanplattenmaterial. Im Randbereich kann die Beschichtung 3 von der Auflageseite her freigeschnitten werden, um einen nachverformbaren Beschichtungsstreifen zu bilden, der zunächst freisteht und an die nach innen versetzte, angeschnittene Schmalseitenfläche angeformt und zugleich daran verklebt werden kann.

Begonnen wird mit der Bearbeitung des Werkstücks an einer ersten Werkstückecke, hier der Werkstückecke 7, wie es Fig. 1 zeigt. An dieser Werkstückecke 7 wird eine Ausklinkung 9 eingeschnitten, deren Flanken 10 vom Scheitel der Ausklinkung 9 nach außen weg eine besondere Kontur haben. Dadurch wird erreicht, daß die Schnittkanten 15 der Beschichtung 3 an der Oberseite 2 des Werkstücks, die in den Fig. 2 und 3 näher bezeichnet sind, einen solchen geschwungenen Verlauf haben, daß sie sich im nachhinein spaltlos aneinanderlegen können, wie nachstehend noch erläutert werden wird. Voraussetzung dafür ist, daß die Ausklinkung 9 spiegelsymmetrisch zur Diagonalen durch die Werkstückecke 7 hindurch ausgebildet ist, was gleichermaßen für den Verlauf der Schnittkanten 15 der Beschichtung 3 zutrifft.

Der Freischnitt des Randbereichs der Beschichtung .3 an der Werkstückoberseite 2 wird zugleich dazu genutzt, an der betreffenden Werkstückschmalseite 4 - 6 die gewünschte, längslaufende Profilierung anzubringen. Wie aus Fig. 2 hervorgeht, wird damit an der ersten Werkstück-Schmalseite 4 begonnen, die zunächst von der Ecke 7 des Werkstücks aus nur über einen Teil ihrer Länge profiliert wird. Dadurch wird von der Beschichtung 3 an der Oberseite 2 des Werkstücks bereits teilweise ein nachverformbarer Beschichtungsstreifen 13 freigelegt.

Wie Fig. 3 zeigt, wird anschließend an der zweiten Werkstück-Schmalseite 5 auf der gesamten Länge die entsprechende Profilierung angeschnitten, wobei zugleich der Randbereich der Beschichtung 3 an der Werkstückoberseite 2 als nachverformbarer Beschichtungsstreifen 12 freigelegt wird. Durch den Anschnitt der zweiten Werkstück-Schmalseite 5 wird im Bereich der Ecke 7 die endgültige Form der Eckkante 11 geschaffen, entlang der die erwähnten Schnittkanten 15 der Beschichtungsstreifen 12 und 13 spaltlos aneinander anfügbar sein müssen.

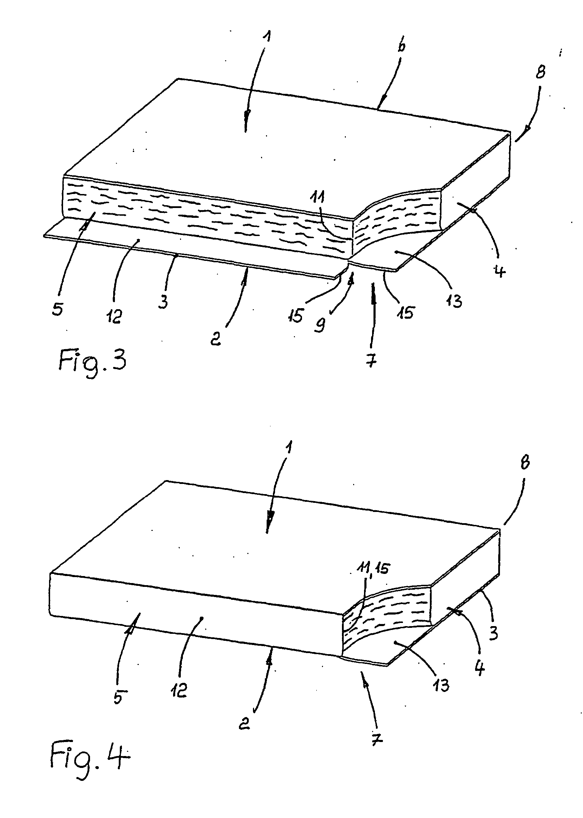

Nachfolgend wird der Beschichtungsstreifen 12 an der Werkstück-Schmalseite 5 auf die Schmalseitenfläche aufgeformt und darauf fest verklebt. Danach ergibt sich der Zustand des Werkstücks, wie er in Fig. 4 wiedergegeben,ist. Hierbei folgt die Kontur der Schnittkante 15 an dem Beschichtungsstreifen 12 dem Verlauf des Eckgrates 11 an der Werkstückecke 7.

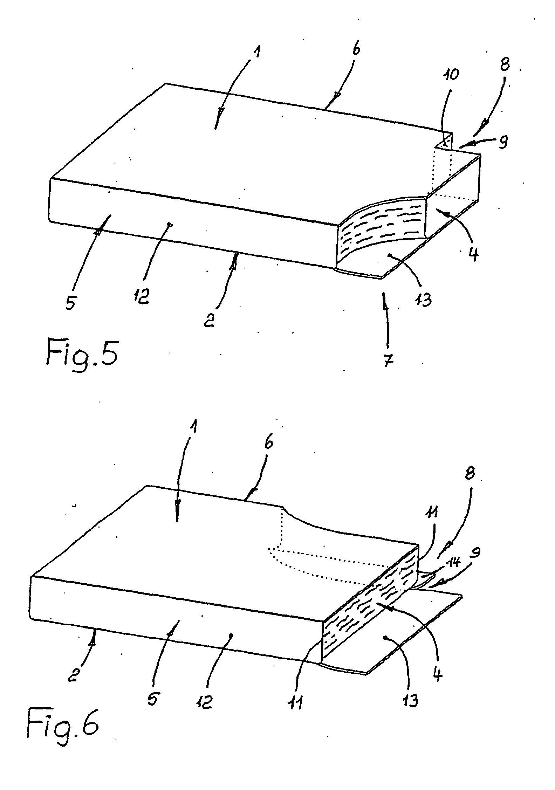

Im nächsten Bearbeitungsschritt erfolgt die Anbringung einer weiteren Ausklinkung 9 an der in Umfangsrichtung des Werkstücks zur ersten Ecke 7 benachbarten Ecke 8. Die Ausklinkung 9 wird hier in gleicher Weise wie an der Ecke 7 vorgenommen, so daß auch hier die Ausklinkung 9 eine zur Eckdiagonalen symmetrische Ausbildung hat. Damit ist der Zustand erreicht, den Fig. 5 wiedergibt.

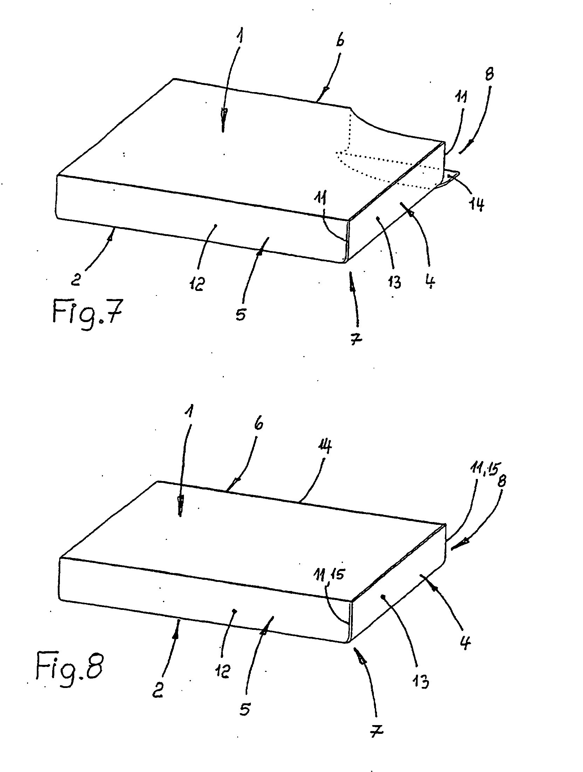

Wie weiter aus Fig. 6 hervorgeht, wiederholt sich jetzt an der zweiten Werkstückecke 8 der Bearbeitungsvorgang in gleicher Weise, wie er aus den Fig. 1 - 4 bzgl. der ersten Werkstückecke 7 hervorgeht. Ausgehend von der zweiten Werkstückecke 8 wird zunächst die dritte Werkstück-Schmalseite 6 entlang einer Teillänge profiliert, danach wird an der ersten Werkstück-Schmalseite 4 auf der restlichen Teillänge von der Ecke 8 aus gesehen die Profilierung vervollständigt. Danach ergibt sich das Stadium, das in Fig. 6 dargestellt ist. Hier ergibt sich bereits an der dritten Werkstück-Schmalseite 6 ein teilweiser freigeschnittener Beschichtungsstreifen 14.

Fig. 7 macht den nachfolgenden Bearbeitungsschritt deutlich, bei dem an der ersten Werkstück-Schmalseite 4 der dortige Beschichtungsstreifen 13 angefahren und verklebt worden ist.

Die nachfolgende Bearbeitung des Werkstücks kann sich in analoger Weise fortsetzen, sofern rundum alle Schmalseiten des Werkstücks in der geschilderten Weise im Postformingverfahren beschichtet werden sollen. Fig. 8 veranschaulicht hingegen ein Werkstück, das lediglich an drei in Umfangsrichtung aufeinanderfolgenden Schmalseiten 4 - 6 mit den nachverformten Kantenstreifen 12 - 14 beschichtet ist. Bei dieser Ausführung kann man sogleich die Profilierung der dritten Schmalseite 6 auf ihrer gesamten Länge vornehmen, da an der dritten und der vierten Werkstückecke das aufgezeigte Problem nicht auftritt.

Wichtig ist, das erzielte Ergebnis, daß nämlich entlang der Eckgrate 11, die im Trägermaterial des Werkstücks gebildet sind, die Beschichtungsstreifen 12 und 13 mit ihren durch die Ausklinkungen 9 gebildeten Schnittkanten 15 paßgenau aneinanderstoßen und somit an denjenigen Werkstückecken 7 und 8, an denen die beschichteten Werkstück-Schmalseiten 4 und 5 sowie 4 und 6 aneinander anschließen, störende Spalte zwischen den Schnittkanten 15 der Beschichtungsstreifen 12 und 13 nicht bestehen.

## Patentansprüche

1. Postformingverfahren zum Beschichten von profilierten Schmalseiten (4-6) plattenförmiger Werkstücke aus Holzersatzmaterialien, die an ihrer Oberseite (2) eine nachverformbare Beschichtung (3) haben, die von ihrer aufliegenden Unterseite her unter Anbringung des Schmalseitenprofils mittels eines Formfräsers freigeschnitten wird, wonach der freistehende Streifen (12, 13) der B eschichtung (3) an die betreffende Werkstückschmalseite (4-6) unter Verkleben mit der profilierten Schmalseitenfläche angeformt wird, wobei
bei über Eck aneinander anschließenden Werkstück-Schmalseiten (4, 5) an der betreffenden Werkstückecke (7) eine zur Eckdiagonalen spiegelsymmetrische Ausklinkung (9) eingeschnitten wird, deren Flanken (10) zumindest im Bereich der Beschichtung (3) an der Plattenoberseite (2) vom S cheitel der Ausklinkung (9) weg nach außen hin eine Kontur haben, welche dem Verlauf des Eckgrates (11) entspricht, unter dem die fertig profilierten Werkstückschmalseiten (4, 5) an der Werkstückecke (7) aneinander anschließen, wonach von der Werkstückecke (7) weg die erste daran angrenzende Schmalseite (4) profiliert wird, danach die zweite angrenzende Schmalseite (5) profiliert und der an dieser Schmalseite (5) freigeschnittene Beschichtungsstreifen (12) angeformt und dann erst der an der ersten Schmalseite freigeschnittene Beschichtungsstreifen (13) angeformt wird.

2. Postformingverfahren nach Anspruch 1,
**dadurch gekennzeichnet,**
**daß** bei zwei in Umfangsrichtung des Werkstücks aufeinanderfolgenden Ecken (7, 8) von der ersten Werkstückecke (7) weg, an der jeweils das Ausklinken erfolgt ist, die daran angrenzende erste Schmalseite (4) nur über einen Teilbereich ihrer Länge profiliert wird und nach dem Anformen des Beschichtungsstreifens (11) an die zweite, an diese erste Werkstückecke (7) angrenzende Schmalseite (5) zunächst nach dem Ausklinken an der nachfolgenden Werkstückecke (8) die erste, zwischen den beiden Werkstückecken (7, 8) sich erstreckende Schmalseite (4) auf ihrer gesamten Länge fertig profiliert wird, an der das Anformen des freigeschnittenen Beschichtungs-Streifens (13) dann erst erfolgt, wenn die an die zweite Werkstückecke (8) angrenzende, dritte Schmalseite (6) ganz oder auf einer Teillänge von der zweiten Werkstückecke (8) ausgehend profiliert ist.

3. Postformingverfahren nach Anspruch 2,
**dadurch gekennzeichnet,**
**daß** bei mehr als zwei in Umfangsrichtung des Werkstücks aufeinanderfolgenden Ecken (7, 8) sich der Bearbeitungsvorgang von der in Umfangsrichtung des Werkstücks vorausliegenden Werkstückecke (7) zur jeweils nachfolgenden Werkstückecke (8) wiederholt.

4. Postformingverfahren nach Anspruch 2 oder 3,
**dadurch gekennzeichnet,**
**daß** zunächst alle Ausklinkungen (9) an den betreffenden Werkstückecken (7, 8) eingeschnitten werden, anschließend die jeweiligen Werkstückschmalseiten (4-6) auf ganzer Länge profiliert und danach die daran freigeschnittenen Beschichtungsstreifen ( 9) angeformt werden.

## Claims

1. Post forming method for covering the profiled narrow sides (4-6) of flat workpieces made of wood substitute materials which have on their top side (2) a post-formable covering (3) which is exposed by means of a form milling machine from its underlying underside for attaching to the narrow side profile, after which the exposed strip (12,13) of the covering (3) is moulded onto the relevant narrow side (4-6) of the workpiece through adhesion with the profiled narrow side surface, whereby
in the case of narrow sides (4,5) of the workpiece which meet each other at the corner a notch (9) is cut into the relevant workpiece corner (7) mirror symmetrical in respect of the corner diagonal whereby the flanks (10) of the notch at least in the region of the covering (3) on the top side (2) of the panel have extending outwards away from the apex of the notch (9) a contour which corresponds to the path of the corner edge (11) at which the finished profiled workpiece narrow sides (4,5) meet each other at the workpiece corner (7), whereupon the first narrow side (4) adjoining the workpiece corner (7) is profiled away from same, the second adjoining narrow side (5) is then profiled and the covering strip (12) which is exposed at this narrow side (5) is moulded on and only then is the covering strip (13) which is cut free at the first narrow side moulded on.

2. Post forming method according to claim 1,
**characterised in that**
in the case of two successive corners (7, 8) in the peripheral direction of the workpiece away from the first workpiece corner (7) at which the notch is made the first narrow side (4) adjoining same is only profiled over a part of its length and after moulding the covering strip (11) onto the second narrow side (5) adjoining this first workpiece corner (7) only after providing notches at the following workpiece corner (8) is the first narrow side (4) extending between the two workpiece corners (7,8) finished profiled over its entire length and moulding of the exposed covering strip (13) only then takes place when the third narrow side (6) adjoining the second workpiece corner (8) is profiled wholly or on a part of the length starting from the second workpiece corner (8).

3. Post forming method according to claim 2,
**characterised in that**
with more than two successive corners (7, 8) in the peripheral direction of the workpiece the finishing process is repeated for each following workpiece corner (8) from the workpiece corner (7) lying in front in the peripheral direction of the workpiece.

4. Post forming method according to claim 2 or 3,
**characterised in that**
at first all notches (9) are cut in at the relevant workpiece corners (7,8), then the relevant workpiece narrow sides (4-6) are profiled over the entire length and then the covering strips (9) which have been exposed are moulded on.

## Revendications

1. Procédé de postformage, pour revêtir les côtés minces profilés (4-6) de pièces en forme de plaques en matières de remplacement du bois, qui présentent sur leur face supérieure (2) un revêtement postformable (3) qui est dégagé de sa face sous-jacente, portante, par découpage à l'aide d'une fraise à profiler, lors de la réalisation du profil des côtés minces, ce après quoi la bande dégagée (12, 13) du revêtement (3) est adaptée à la forme du côté mince concerné (4-6) de la pièce, avec collage sur la surface profilée dudit côté mince, une entaille (9) inversement symétrique par rapport à la diagonale d'angle étant pratiquée dans l'angle concerné (7) aux angles assemblés en diagonale, et ses flancs (10) présentant, au moins dans la zone du revêtement (3), sur la face supérieure (2) de la plaque, un contour qui, orienté vers l'extérieur en partant du sommet de ladite entaille (9), correspond au tracé de l'arrête angulaire (11), sous laquelle les côtés minces (4, 5) de la pièce ayant reçu un profilage final se rejoignent dans l'angle (7) de ladite pièce, ce après quoi, à partir de l'angle (7) de la pièce, le premier côté mince (4) contigu, puis le deuxième côté mince suivant (5) sont profilés et la bande de revêtement (12) dégagée sur ce côté mince (5) de la pièce est adaptée, la bande de revêtement (13), dégagée sur le premier côté mince, n'étant qu'alors adaptée au profil.

2. Procédé de postformage selon la revendication 1,
**caractérisé en ce que**,
lorsque deux angles (7, 8) se succèdent dans le sens périphérique de la pièce, à partir du premier angle (7) de ladite pièce, auquel l'entaille a été découpée, le premier côté mince (4) contigu est profilé seulement sur une partie de sa longueur et qu'après l'adaptation de la bande de revêtement (11) au deuxième côté mince (5) contigu à ce premier angle (7) de la pièce, le premier côté (4) s'étendant entre les deux angles (7, 8) de la pièce est d'abord soumis à un profilage final sur toute sa longueur, après que l'entaille ait été pratiquée dans l'angle suivant (8) de la pièce, l'adaptation de la bande de revêtement (13) dégagée n'y étant ensuite effectuée qu'après que le troisième côté étroit (6), contigu au deuxième angle (8) de la pièce, ait été profilé sur toute ou sur une partie de sa longueur, à partir du deuxième angle (8).

3. Procédé de postformage selon la revendication 2,
**caractérisé en ce que**,
lorsque plus de deux angles (7,8) se succèdent dans le sens périphérique de la pièce, l'opération de revêtement est réitérée pour chacun des angles (8) suivants de la pièce, à partir de l'angle (7) de la pièce qui précède les autres angles dans le sens périphérique de ladite pièce.

4. Procédé de préformage selon la revendication 2 ou 3,
**caractérisé en ce que**
toutes les entailles (9) sont d'abords découpées aux angles (7, 8) concernés, ce après quoi les côtés minces (4-6) de la pièce sont respectivement profilés sur toute leur longueur, ce après quoi les bandes de revêtement y dégagées (9) sont adaptées.
